Europäisches Patentamt

European Patent Office

Office européen des brevets

(19)

(11) Veröffentlichungsnummer: **0 025 851**
**B2**

(12) **NEUE EUROPÄISCHE PATENTSCHRIFT**

(45) Veröffentlichungstag der neuen Patentschrift:
**31.10.90**

(21) Anmeldenummer: **80104681.4**

(22) Anmeldetag: **08.08.80**

(51) Int. Cl.⁵: **C 08 G 64/02,** C 08 G 63/89,
B 01 D 71/06, C 08 G 63/66

(54) Verfahren zur Herstellung von Polycarbonat-Polyäther-Blockcopolymeren.

(30) Priorität: **13.08.79 DE 2932737**

(43) Veröffentlichungstag der Anmeldung:
**01.04.81 Patentblatt 81/13**

(45) Bekanntmachung des Hinweises auf die
Patenterteilung:
**09.05.84 Patenblatt 84/19**

(45) Bekanntmachung des Hinweises auf die
Entscheidung u¨ber den Einspruch:
**31.10.90 Patentblatt 90/44**

(84) Benannte Vertragsstaaten:
**AT BE CH DE FR GB IT LI LU NL SE**

(56) Entgegenhaltungen:
**EP-A-0 135 769**
**DE-A-2 510 337**
**DE-A-2 711 498**
**DE-A-2 713 283**
**DE-B-1 251 952**
**GB-A-1 395 530**
**US-A-3 030 335**
**US-A-3 161 615**
**US-A-3 945 926**
**US-A-4 069 151**
**US-A-4 075 108**
**US-A-4 160 791**

(73) Patentinhaber: **Akzo Patente GmbH**
**Postfach 10 01 49 Kasinostrasse 19-23**
**D-5600 Wuppertal-1 (DE)**

(72) Erfinder: **Behnke, Joachim, Dr.,Dipl.-Ing.**
**D-8762 Amorbach**
**In den Weizenäckern 26 (DE)**
Erfinder: **Löffelmann, Walter**
**D-8765 Erlenbach**
**Pfalzstrasse 18 (DE)**

(56) Entgegenhaltungen:
**Encyclopedia of Polymer Science & Technology**
**Band 19, 1969 Interscience New York S. 714-716**
**Organikum 1964, Deutscher Verlag der**
**Wissenscha ften, Berlin Seite 6**
**JACS 58, 1877 (1936)**

**P.J. Flory, Principles of Polymer Chemistry Kap.**
**III und IV (1953)**

**J. Polym. Sc. 9, 69 (1952)**

**J. Polym. Sc. 11, 424 (1953)**
**Polymer Handbook, 2nd. Ed., II 405 ff (1975)**

**Fitzer/Fritz, Technische Chemie, 500, 506 (1975)**

**Fitzer/Fritz, a.a.O., S.486**

**Denbigh/Turner, Einführung in die chem.**
**Reaktionstechnik, 126, 127 (1973)**

Courier Press, Leamington Spa, England.

**Beschreibung**

Die Erfindung betrifft ein Verfahren zur kontinuierlichen Herstellung von Polycarbonat-Polyätherblockcopolymeren.

Aus der Arbeit von Goldberg "Journal of Polymer Science", Part C, No. 4, Seiten 707 bis 730 (1963) ist es bekannt, Polyäther-Polycarbonatblockcopolymere durch Reaktion von etwa 95 bis etwa 65 Gew.-% Bisphenol A und dazu entsprechend von etwa 5 bis etwa 35 Gew.-% eines Polyäthylenglykols mit einer entsprechenden Menge Phosgen, Polycarbonat-Polyätherblockcopolymere herzustellen. Es bereitete bisher erhebliche Schwierigkeiten, solche Polycarbonat-Polyätherblockcopolymere in einem kontinuierlichen Verfahren herzustellen.

Das in der DE—OS 2 636 784 beschriebene diskontinuierliche Grenzflächenkondensationsverfahren benötigt einen sehr hohen Phosgenüberschuss, um zu ausreichend hohen Umsätzen zu gelangen und verwendet das Bisphenol A in Form des Dinatriumsalzes. Darum gelingt es nicht, Polymere zu erzeugen, deren relative Viskosität mehr als ca. 1,5 dl/g beträgt. Die Aufarbeitung der gewonnenen Polymeren gestaltet sich aufgrund der zahlreichen Trenn- und Reinigungsschritte schwierig und aufwendig.

Ein kontinuierliches Polykondensationsverfahren zur Herstellung von Polycarbonaten mit Einsatz vorgekühlter Lösungen, jedoch nach dem Phasengrenzflächenprinzip, ist aus der BE—PS 666 636 bekannt, bei dem die Polycarbonate jedoch nur mit Molekulargewichten bis maximal 60 000 erhalten wurden.

Die Herstellung von Polycarbonaten durch Umsetzung von 4,4'-Dioxydiphenylalkanen mit Phosgen in Gegenwart von Pyridin und indifferenten Lösungsmitteln wird beispielsweise in "Angewandte Chemie" 68, Seite 635 (1956) beschrieben. Als geeignetes Lösungsmittel für Polycarbonate ist Methylenchlorid bereits mehrfach beschrieben worden.

DE—PS 971 790 und Chem. Engng. Bd. 67 vom 14. November 1960, Seite 174 ff beschreiben Verfahren, bei denen in Lösung vorgelegtes Bisphenol A mit gasförmig zugeführtem Phosgen umgesetzt wird. Die Verweilzeiten im Reaktor sind mit 1 bis 3 Stunden angegeben. Der Einsatz äquivalenter Anteile von Phosgen und Bisphenol A bezieht sich hier auf das während der Reaktion insgesamt eingeleitete Phosgen.

Auf die Zusammensetzung der Copolymeren hat neben der Temperatur aber auch die Art der Zugabe eine erhebliche Bedeutung. So ist es keineswegs gleichgültig, ob eines der Comonomeren vorgelegt wird und das andere Comonomere diesem zunächst im Überschuss vorliegenden Monomeren zugegeben wird oder ob die Comonomeren in irgendeinem Verhältnis zueinander kontinuierlich zugegeben werden.

Die ein Polycarbonat-Polyätherblockcopolymere betreffende US—PS 4 160 791 nennt zwar relativ hohe Molekulargewichte für das Blockcopolymer. Die erzielten Intrinsic-Viskositäten liegen aber deutlich unter den erfindungsgemäss erzielbaren Intrinsic-Viskositäten von bis zu 300 ml/g. Sie werden wegen des dort bevorzugten Membranbildungsverfahrens (Phaseninversionsverfahren) auch gar nicht gewünscht, ebensowenig wie eine enge Molekulargewichtsverteilung erwünscht ist, da sie für Schwierigkeiten bei der Filtration der Giesslösung verantwortlich gemacht wird.

In der DE—AS 1 251 952 wird ein Verfahren beschrieben, bei dem die Polycarbonatlösung in einer hochtourigen Schervorrichtung mit heissem Wasser gemischt und dann in einem bis zu einer bestimmten Höhe mit heissem Wasser gefüllten Verdampfer gesammelt und dort über eine längere Verweilzeit festgehalten, bevor die Aufschlämmung aus den System entnommen und getrocknet wird. Zum Stande der Technik wird in der DE—AS 1 251 952 auch ein Verfahren beschrieben, bei dem die Polycarbonatlösung in einen Nebel heissen Wassers gesprüht und anschliessend in einem heisses Wasser enthaltenden Gefäss gesammelt. Das dabei sich abscheidende Polycarbonat wird als klebrige Masse geschildert.

Aufgabe der vorliegenden Erfindug war es, lösungsmittelfreie Teilchen von Polycarbonat-Polyätherblockcopolymeren mit hohen Molekulargewichten und grosser Reinheit in einem kontinuierlichen Verfahren herzustellen.

Gelöst wird diese Aufgabe durch ein Verfahren, welches erfindungsgemäss dadurch gekennzeichnet ist, dass eine gekühlte Lösung von Bisphenol A, Polyalkylenglykol und Pyridin in einem chlorierten Kohlenwasserstoff, der einen Schmelzpunkt unter 0°C aufweist und eine gekühlte Lösung von Phosgen in einem chlorierten Kohlenwasserstoff mit einem Schmelzpunkt von unter 0°C in ein gekühltes Reaktionsgefäss in solchen Mengen eingeleitet werden, dass Phosgen mit einem Überschuss von weniger als 10 Gew.-% der stöchiometrisch erforderlichen Gewichtsmenge zu Bisphenol A und Polyalkylenglykol zugeführt wird und dass die Einleitungsrohre oberhalb des Flüssigkeitsspiegels der Reaktionsmischung in einem solchen Abstand voneinander enden, dass die ausfliessenden Lösungen erst innerhalb der gerührten Reaktionsmischung miteinander in Kontakt kommen und reagieren und dass die erhaltene hochviskose Polycarbonat-Polyäther-Copolymerisatlösung als ein Komponentenstrom und warmes, salzsäurehaltiges Wasser als zweiter Komponentenstrom durch eine Mehrkomponentendüse in ein Gefäss gesprüht und dabei das Lösungsmittel azeotrop verdampft wird und das ausgefällte Copolymere auf ein Siebband gebracht und auf diesem gereinigt wird.

Bei diskontinuierlichen Verfahren wird für eine erfolgreiche Polykondensation ein stöchiometrischer Überschuss von wenigstens 20 Gew.-% benötigt. Es hat sich gezeigt, dass es auf eine Begrenzung und genaue Einhaltung der Stöchiometrie-Verhältnisse Phosgen zu Diolen ankommt und dass der Überschuss geringer als 10% sein muss, wenn niedermolekulare Produkte und eine grössere Uneinheitlichkeit vermieden werden soll.

Auch muss unbedingt vermieden werden, dass die Reaktionspartner bereits in Kontakt kommen und reagieren, bevor sie sich in der gerührten Reaktionsmischung befinden.

Überraschend hat sich gezeigt, dass sich die erhaltenen Polymerlösungen in einfacher Weise unmittelbar im Anschluss an das kontinuierliche Verfahren der Erfindung zu lösungsmittelfreien Polymerteilchen kontinuierlich aufarbeiten lassen. Dazu wird bie bei der Polykondensation erhaltene Polycarbonat-Polyäther-Copolymerisatlösung als ein Komponentenstrom und warmes salzsäurehaltiges Wasser als zweiter Komponentenstrom durch eine Mehrkomponentendüse in ein Gefäss gesprüht, wobei das Lösungsmittel azeotrop verdampft und das Copolymere auf ein Siebband oder dergleichen gebracht und anschliessend auf diesem gereinigt wird. Wasser-Lösungsverhältnis und Wassertemperatur werden vorzugsweise so aufeinander abgestimmt, dass das Polymer in einer offenporigen Form ausfällt, was die weitere Reinigung des Produktes wesentlich erleichtert.

Dieses Aufarbeitungsverfahren unterscheidet sich deutlich von den bekannten Verfahren und bringt erhebliche Vorteile mit sich. Die Komponentenströme werden nicht gemischt, sondern gemeisam versprüht. Eine Vermischung der hochviskosen Polymerlösung mit dem niedrigviskosen Wasser würde erhebliche Schwierigkeiten mit sich bringen. Dass auf dem erfindungsgemässen Wege eine vollständige Abtrennung bei kurzer Verweilzeit und durch einfaches Versprühen möglich ist, war nach den Ausführungen der DE—AS 1 251 952 nicht zu erwarten.

Die chlorierten Kohlenwasserstoffe mit einem Schmelzpunkt unter 0°C eignen sich deshalb für das erfindungsgemässe Verfahren, weil sich deren Lösungen auf tiefe Temperaturen abkühlen lassen, so dass dadurch ein grosser Teil der Reaktionswärme schnell abgeführt wird. Polycarbonat-Polyäther-Copolymere lösen sich in ihnen einwandfrei. Bevorzugt wird für das erfindungsgemässe Verfahren als eines der Lösungsmittel Methylenchlorid eigesetzt. Um die Lösungsmittelrückgewinnung möglichst einfach durchführen zu können, werden in Ausgestaltung der Erfindung vorzugsweise für beide Lösungen das gleiche Lösungsmittel eingesetzt.

Die Zufuhr der Lösungen in den Reaktor wird zweckmässig in Abhängigkeit von der kinematischen Zähigkeit geregelt.

Ein Teil der Reaktionswärme wird durch abgeführt, dass die Lösungen auf Temperaturen unter 0°C gekühlt sind. Durch weitere Aussenkühlung wird die Temperatur der Reaktionsmischung auf 24 bis 35°C gehalten. Vorzugsweise wird die Temperatur der Reaktionsmischung auf 27 bis 32°C gehalten. Entsprechend der Temperatur der Reaktionsmischung lässt sich das Ausmass der Polymerisation in gewünschter Weise einstellen. Polymerisate mit guten mechanischen Eigenschaften werden dann erhalten, wenn die Polymerisation bis zu einer Intrinsic-Viskosität des Copolymeren von 150 bis 300 ml/g geführt wird. Die Intrinsic-Viskosität wird in Chloroform bei 25°C gemessen.

Ein wichtiges Anwendungsgebiet für die erfindungsgemäß hergestellten Polymeren sind Membranen für die Dialyse — insbesondere Hämodialyse, für die Ultrafiltration, auch für die Hämofiltration und für die Umkehrosmose, beispielsweise bei der Meerwasserentsalzung.

Für solche Membranen wird vorzugsweise das Gewichtsverhältnis Bisphenol A zu Polyäthylenglykol so eingestellt, dass es zwischen 2,5:1 und 20:1 beträgt. Das mittlere Molekulargewicht des Polyalkylenglykols liegt vorzugsweise zwischen 1000 und 20 000, wobei unter mittlerem Molekulargewicht das Gewichtsmittel verstanden wird.

Anhand des folgenden Ausführungsbeispiels wird die Erfindung näher erläutert.

Aus einem Vorratsbehälter, der eine auf. −10°C gekühlte, sorgfältig filtrierte Monomerlösung aus

9.383,1 g Bisphenol A
2.613,0 g Polyäthylenglykol 6000
9.855,0 g Pyridin und
56.100,0 g Methylenchlorid (:alkoholfrei!)

enthält, werden mittels einer hochgenau dosierenden Membrankolbenpumpe (Fehler < 1%), die ebenso wie auch alle Rohrleitungen gut isoliert ist, pro Minute 49 ml Lösung in einen Reaktor gepumpt. Zur Überprüfung der Dosierkonstanz werden sowohl die Temperatur der Lösung als auch die Dosiermenge (mittels kontinuierlicher Durchflussmessung) registriert.

Analog verfährt man mit der Lösung aus

4.929,0 g Phosgen und
60.000,0 g Methylenchlorid (alkoholfrei),

die in einer Menge von 33,6 ml/Minute dosiert wird. ( = 8% Überschuss). Aus diesen Teilmengen entstehen bei der Polykondensation pro 24 Std. etwa 15 kg eines Copolymers aus Bisphenol-A-Polycarbonat-Polyäthylenglykol im Verhältnis 80:20. Es sind selbstverständlich durch Änderung der Monomerzusammensetzung auch andere Copolykondensate herstellbar.

Der Reaktor besteht aus einem zylindrischen Gefäss mit Doppelmantel zur Aussenkühlung, das mit einem intensiv wirkenden Rührer ausgestattet ist (z.B. Kotthof-Mischsirene). Durch den Deckel des Reaktors führen ausser der Rührerwelle die beiden Leitungen für die Monomer- und Phosgenlösung. Ausserdem ist das Gefäss mit einem auf −30°C gekühlten Rückflusskühler versehen, der Ausgang des Kühlers führt zu einem Gaswäscher.

Die Leitungen der Monomer- und Phosgenlösung dürfen mit ihren Enden nicht in die Reaktionslösung eintauchen. Weiterhin wird dafür gesorgt, dass die Teilströme direkt in die Einsaugzone des Rührers gelangen, ohne sich bereits vor Eintritt in die Reaktionslösung zu mischen.

Die Polymerisation verläuft unter starker Wärmeentwicklung. Die auftretende Wärme wird durch Aussenkühlung in dem Masse abgeführt, dass die Temperatur im Reaktor oberhalb von 24°C bleibt und vorzugsweise zwischen 27 und 32°C liegt. So liessen sich Polymerisate mit Intrinsicviskositäten des Copolymeren bis zu 300 ml/g erreichen.

Die Verweilzeit im Reaktor beträgt etwa 5 Minuten. An der Eintropfstelle im Reaktor, der nur zu etwa 80% gefüllt ist, beobachtet man zunächst die gelbe Farbe des Pyridin—COCl$_2$—Komplexes, die jedoch schon wenige Zentimeter tiefer nach Weiss umschalägt. Die Reaktionslösung wird schnell viskos, so dass bereits beim Verlassen des Reaktors die kinematische Zähigkeit der Reaktionsmischung dann etwa 30 Pa.s. beträgt.

Nach Verlassen des Reaktors wird die Lösung in einen auf +25°C temperierten zylindrischen Verweilreaktor gepumpt, der mit einem sich langsam drehenden Rührer ausgerüstet ist, dessen Geometrie so ausgelegt ist, dass eine Durchmischung jeweils nur in der horizontalen Ebene erfolgt. Die Gesamtverweilzeit im gesamten Kondensationssystem bis zum Austritt des Produktes aus dem Verweilzeitreaktor beträgt etwa 45 Minuten.

Die ausreagierte Polymerlösung wird in einen kleinen Pufferbehälter gegeben und von dort einer kontinuierlichen Fälleinrichtung zugeführt, die wie folgt arbeitet:

Die Polymerlösung wird durch ein Rohr gedrückt, das an seinem vorderen Ende mit einer mehrere Bohrungen (0,8 mm ∅) aufweisenden Düse versehen ist. Das Rohr ist von einem Mantel umgeben, der etwa in Höhe der Düse offen ist und einen engen Ringspalt bildet, so dass insgesamt etwa das Bild einer Kern-Mantel-Düse mit mehreren Kernsträngen entsteht. Am hinteren Ende des Mantels, der mit dem Innenrohr durch eine Stopfbüchse abgedichtet ist, befindet sich ein Zuführstutzen.

Während durch das Innenrohr die Polymerlösung gedrückt wird und aus den Düsenlöchern austritt, wird durch den Mantel mit HCl angesäuertes Wasser mit einer Temperatur von 80° bis etwa 100°C gedrückt. Die HCl bindet überschüssiges Pyridin, um zu verhindern, dass Pyridin abdestilliert. Die Geschwindigkeit des Wassers beim Austritt aus dem Ringspalt ist sehr viel grösser als die Austrittsgeschwindigkeit der Polymerlösung. Da die Wassertemperatur wesentlich oberhalb der Siedetemperatur des Methylenchlorids der Polymerlösung liegt, erfolgt am Düsenaustritt eine sehr schnelle Verdampfung des Lösungsmittels: Das Polymer fällt in Form kurzer, abgerissener Fäden aus. Die Fällanze steckt in einem weiten, senkrecht stehenden, nach oben sich noch erweiternden Rohr derart, dass eine tangentiale Anströmung der Innenwand des Rohres erfolgt und damit eine Art Zyclonwirkung erzeugt wird. Das Polymer-Wassergemisch fällt auf einer Spiralbahn innerhalb des Rohres nach unten in einen offenen Auffangbehälter, dessen Wasserstandshöhe das Rohr nach unten abschliesst. Der Behälter ist mit einem Überlauf versehen.

Polymer und Wasserlösung fliessen über ein sich bewegendes Sieb, wobei die wässrige Lösung aus dem Siebablauf mittels einer Pumpe wieder der Fällanze zugeführt wird. Das System wird so beheizt, dass die Wassertemperatur konstant bleibt.

Diese Art der Fällung hat gegenüber bekannten Verfahren wesentliche Vorteile:

1. Man benötigt kein organisches Fällmittel.

2. Das Lösungsmittel wird sofort praktisch quantitativ zurückgewonnen.

3. Das Polymer fällt in einer so lockeren offenporigen Form an, dass die nachfolgende Auswaschstrecke (das Pyridin HCl muss <10 ppm entfernt werden!) kurz ist.

4. Die Rückgewinnung des Pyridins aus der wässrigen Lösung ist relativ einfach: Man versetzt mit Alkali bis zum Neutralpunkt und extrahiert mit CH$_2$Cl$_2$, oder destilliert dass Pyridin azeotrop ab und extrahiert dann.

Nach dem Fällen des Polymeren wird auf dem Siebband kontinuierlich gewaschen, abgesaugt und getrocknet.

Das Endprodukt besitzt einen hohen Reinheitsgrad und ist toxikologisch einwandfrei. Auch deshalb lässt es sich risikolos für Hämodialyse- und Hämofiltrationsmembranen einsetzen.

**Patentansprüche**

1. Verfahren zur kontinuierlichen Herstellung von Polycarbonat-Polyäther-Copolymeren, dadurch gekennzeichnet, dass eine gekühlte Lösung von Bisphenol A, Polyalkylenglykol und Pyridin in einem chlorierten Kohlenwasserstoff, der einen Schmelzpunkt unter 0°C aufweist und eine gekühlte Lösung von Phosgen in einem chlorierten Kohlenwasserstoff mit einem Schmelzpunkt von unter 0°C in ein gekühltes Reaktionsgefäss in solchen Mengen eingeleitet werden, dass Phosgen mit einem Überschuss von weniger als 10 Gew.-% der stöchiometrisch erforderlichen Gewichtsmenge zu Bisphenol A und Polyalkylenglykol zugeführt wird und dass die Einleitungsrohr oberhalb des Flüssigkeitsspiegels der Reaktionsmischung in einem solchen Abstand voneinander enden, dass die ausfliessenden Lösungen erst innerhalb der gerührten Reaktionsmischung miteinander in Kontakt kommen und reagieren und dass die erhaltene hochviskose Polycarbonat-Polyäther-Copolymerisatlösung als ein Komponentenstrom und warmes, salzsäurehaltiges Wasser als zweiter Komponentenstrom durch eine Mehrkomponentendüse in ein Gefäss gesprüht und dabei das Lösungsmittel azeotrop verdampft wird und das ausgefällte Copolymere auf ein Siebband gebracht und auf diesem gereinigt wird.

2. Verfahren nach Anspruch 1, dadurch gekennzeichnet, dass wenigstens eines der Lösungsmittel Methylenchlorid ist.

3. Verfahren nach den Ansprüchen 1 bis 2, dadurch gekennzeichnet, dass für beide Lösungen gleiche Lösungsmittel eigesetzt werden.

4. Verfahren nach den Ansprüchen 1 bis 3, dadurch gekennzeichnet, dass die Temperatur der Reaktionsmischung auf 24 bis 35°C gehalten wird.

5. Verfahren nach den Ansprüchen 1 bis 4, dadurch gekennzeichnet, dass die Polykondensation bis zu einer Intrinsicviskosität des Copolymeren von 150 bis 300 ml/g (gemessen bei 25°C in Chloroform) geführt wird, wobei die Zufuhr der Reaktionspartner in Abhängigkeit von der kinematischen Zähigkeit am Ausgang des Reaktors geregelt wird.

6. Verfahren nach den Ansprüchen 1 bis 5, dadurch gekennzeichnet, dass das Gewichtsverhältnis Bisphenol A zu Polyalkylenglykol zwischen 2,5:1 und 20:1 beträgt.

7. Verfahren nach den Anspüchen 1 bis 6, dadurch gekennzeichnet, dass das mittlere Molekulargewicht des Polyalkylenglykols 1000 bis 20.000 beträgt.

## Revendications

1. Procéde pour la fabrication en continu de copolymére polycarbonate-polyéther, caractérisé par le fait qu'une solution refroidie de bisphénol A, de polyalkylèneglycol et de pyridine dans un hydrocarbure chloré, qui présente un point de fusion inférieure à 0°C, puis une solution refroidie de phosgène dans un hydrocarbure chloré ayant un point de fusion inférieure à 0°C, sont introduites dans un récipient laboratoire refroidi dans des quantités telles, que le phosgène est apporté avec un excès de moins de 10% en poids de la quantité pondérale stéchiométriquement nécessaire par rapport au bisphénol A et au polyalkylène-glycol, et que les tubes d'arrivée débouchent au-dessus du niveau de liquide du mélange réactionnel à une distance l'un de l'autre telle, que les solutions qui s'écoulent viennent en contact l'une avec l'autre seulement à l'intérieur du mélange réactionnel agité et réagissent, et que la solution de copolymère polycarbonate-polyéther fortement visqueuse obtenue formant un premier flux de constituant et de l'eau chaude contenant de l'acide chlorhydrique formant un deuxième flux de constituant sont pulvérisées dans un récipient à l'aide d'une buse pour composants multiples, et le solvant est ainsi évaporé azéotropiquement et le copolymère précipité est amené sur une bande tamiseuse et est purifié sur celle-ci.

2. Procédé selon la revendication 1, caractérisé par le fait qu'au moins un des solvants est le chlorure de méthylène.

3. Procédé selon les revendications 1 et 2, caractérisé par le fait que pour les deux solutions on utilise le même solvant.

4. Procédé selon les revendications 1 à 3, caractérisé par le fait que la température du mélange réactionnel est maintenue entre 24 et 35°C.

5. Procédé selon l'une des revendications 1 à 4, caractérisé par le fait que la polycondensation est effectuée jusqu'à une viscosité intrinsèque du copolymère de 150 à 300 ml/g (mesurée à 25°C dans le chloroforme), le débit des réactifs étant réglée en fonction de la viscosité cinématique à la sortie du réacteur.

6. Procédé selon les revendications 1 à 5, caractérisé par le fait que le rapport pondéral du bisphénol A au polyalkylène-glycol est compris entre 2,5:1 et 20:1.

7. Procédé selon les revendications 1 à 6, caractérisé par le fait que le poids moléculaire moyen du polyalkylène-glycol est compris entre 1000 et 20.000.

## Claims

1. A process for the continuous production of polycarbonate-polyether copolymers, characterized in that a cooled solution a bisphenol A, polyalkylene glycol and pyridine in a chlorinated hydrocarbon which has a melting point below 0°C and a cooled solution of phosgene in a chlorinated hydrocarbon which has a melting point below 0°C are introduced into a cooled reaction vessel in such quantities that phosgene is present in an excess of less than 10% by weight of the stoichiometrically necessary quantity by weight relative to bisphenol A and polyalkylene glycol and in that the inlet pipes terminate above the liquid level of the reaction mixture at such a distance from one another that the outflowing solutions only come into contact and react with one another in the stirred reacted mixture and in that the highly viscous polycarbonate-polyether copolymer solution obtained is sprayed as one component stream and warm water containing hydrochloric acid as second component stream through a multicomponent nozzle into a vessel, the solvent being azeotropically evaporated, and the copolymer precipitated is applied to a sieve belt and purified thereon.

2. A process as claimed in claim 1, characterized in that at least one of the solvents is methylene chloride.

3. A process as claimed in claims 1 and 2, characterized in that the same solvents are used for both solutions.

4. A process as claimed in claims 1 to 3, characterized in that the temperature of the reaction mixture is kept at 24 to 35°C.

5. A process as claimed in claims 1 to 4, characterized in that the polycondensation reaction is continued until the copolymer has an intrinsic viscosity of from 150 to 300 ml/g (as measured in chloroform at 25°C), the input of the reactants being regulated in dependence upon the kinematic viscosity at the reactor exit.

6. A process as claimed in claims 1 to 5, characterized in that the ratio by weight of bisphenol A to polyalkylene glycol amounts to between 2.5:1 and 20:1.

7. A process as claimed in claims 1 to 6, characterized in that the average molecular weight of the polyalkylene glycol amounts to between 1000 and 20,000.